# EUROPÄISCHE PATENTANMELDUNG

(11) **EP 1 850 305 A2**
(43) Veröffentlichungstag der Anmeldung: **31.10.2007**
(21) Anmeldenummer: 07008182.3
(22) Anmeldetag: 23.04.2007
(51) Int. Cl.: G09B 21/00

(54) **Anzeigevorrichtung zur taktil erfassbaren Darstellung von Anzeigeelementen sowie Anzeigesystem mit einer solchen Anzeigevorrichtung**

(30) Priorität: 29.04.2006 DE 102006020568
(71) Anmelder: Metec AG, 70176 Stuttgart (DE)
(72) Erfinder: Schäfer, Eugen, 70192 Stuttgart (DE); Grotz, Uwe, 74369 Löchgau (DE); Fuhrmann, Henning, 45891 Gelsenkirchen (DE)
(74) Vertreter: Ostertag, Reinhard

(57) **Zusammenfassung**

Eine Anzeigevorrichtung zur taktil erfassbaren Darstellung von Anzeigeelementen umfaßt ein Gehäuse (12, 24, 46) mit einer Tastfläche (22) sowie eine Vielzahl von Tastelementen (20) welche zwischen einer über die Tastfläche (22) des Gehäuses (12, 24, 46) überstehende Taststellung und einer in die lichte Kontur der Tastfläche (22) eingefahrene Ruhestellung verfahrbar sind. Mit einer Steuerung (44) können ausgewählt einzelne Tastelemente (20) angesteuert werden. Die Tastfläche weist wenigstens zwei Flächenbereiche auf. Außerdem wird ein Anzeigesystem zur Anzeige einer taktil erfassbaren Darstellung von Anzeigeelementen mit einer Anzeigevorrichtung (10) vorgeschlagen, bei welcher eine mit der Anzeigevorrichtung (10) kommunizierende Prozessoreinheit (80) vorgesehen ist. Die Anzeigevorrichtung (10) und das Anzeigesystem ermöglichen eine fast vollständige Interaktion eines blinden bzw. sehbehinderten Anwenders mit einem ausgeführten Computerprogramm.

## Beschreibung

Die Erfindung betrifft eine Anzeigevorrichtung zur taktil erfassbaren Darstellung von Anzeigeelementen mit
a) einem Gehäuse mit einer Tastfläche;
b) einer Vielzahl von Tastelementen, welche zwischen einer über die Tastfläche des Gehäuses überstehende Taststellung und einer in die lichte Kontur der Tastfläche eingefahrene Ruhestellung verfahrbar sind; und
c) einer Steuerung, mit welcher ausgewählt einzelne Tastelemente ansteuerbar sind.

Außerdem betrifft die Erfindung ein Anzeigesystem mit einer solchen Anzeigevorrichtung.

Unter Anzeigeelementen sind vorliegend alle für Normalsichtige visuell erfassbaren, beispielsweise auf einem Computerbildschirm gezeigten Darstellungen zu verstehen.

Bei diesen Anzeigeelementen kann es sich also um reine Bildelemente (Grafiken), aber auch um Zeichenelemente (Schriftzeichen, Symbole oder dergleichen) handeln.

Für blinde und sehbehinderte Personen sind eingangs genannte taktile Anzeigevorrichtungen bekannt, welche von einem Computer auszugebende Informationen in Braille-Schriftzeichen umsetzen, indem auf einer Tastfläche einzelne Anzeigestifte durch Stellmotoren entsprechend der Ausgabe des Computers angesteuert werden.

Solche taktilen Anzeigevorrichtungen sind folglich geeignet, alpha-numerische Informationen und Grafiken anzuzeigen.

Die auf der Anzeigevorrichtung angezeigten Anzeigeelementen auf Anhieb entnehmbare Information ist auf die ertastbare Form des Anzeigeelementes beschränkt.

Mit Form ist hier nicht nur die Außenkontur eines Anzeigeelementes gemeint. Vielmehr soll darunter die flächige Füllung eines Anzeigeelementes verstanden werden.

Die oben erwähnte Informationsbeschränkung ist nicht weiter hinderlich, wenn klar ist, daß nur Schriftzeichen oder nur eine Grafik angezeigt ist.

Finden sich jedoch Anzeigeelemente verschiedener Arten nebeneinander auf der Anzeigevorrichtung, bedarf es eines hohen zeitlichen Aufwandes und hoher Konzentration des blinden bzw. sehbehinderten Anwenders, um die auf der Tastfläche der Anzeigevorrichtung dargestellte grafische Information taktil zu verarbeiten.

Der blinde bzw. sehbehinderte Anwender muß nämlich bei jedem ertastbaren Stift interpretieren, zu welcher Art von Information der ertastete Stift gehört, ob also der ertastete Stift beispielsweise Teil eines Braille-Symbols, einer grafischen Darstellung unbekannten Maßstabs, eines Schwarzschrift-Zeichens, eines Bedienungselementes oder dergleichen ist.

Hinzu kommt, daß einem blinden bzw. sehbehinderten Benutzer eine Interpretationsmöglichkeit von flächig kodierten Informationen fehlt, was aber beispielsweise für die Erfassung einer Grafik unbedingt notwendig ist.

Darüber hinaus ist für einen blinden bzw. sehbehinderten Anwender, auch wenn er eine zusammengehörende Gruppe von Stiften einem bestimmten Anzeigeelement zugeordnet hat, nicht erkennbar, ob dieses Anzeigeelement ein symbolisch dargestelltes Bedienungs-Icon des jeweils ausgeführten Computerprogrammes oder die Darstellung einer Grafik oder eines sonstigen Zeichens bedeutet.

Bei vielen Computerprogrammen ist jedoch eine Interaktion mit grafischen Symbolen, sogenannten Icons, notwendig, um mit diesem Programm arbeiten zu können, die dazu als solche erkannt werden müssen.

Aufgabe der Erfindung ist es, eine taktile Anzeigevorrichtung sowie ein Anzeigesystem der eingangs genannten Art zu schaffen, welche dazu geeignet sind, einen höheren Informationsgehalt über ein taktil erfassbar darzustellendes Anzeigeelement zu vermitteln, und bei welchen dieser höhere Informationsgehalt relativ einfach von einem blinden bzw. sehbehinderten Anwender erfaßt und verarbeitet werden kann.

Diese Aufgabe wird bei einer Anzeigevorrichtung der eingangs genannten Art dadurch gelöst, daß
d) die Tastfläche wenigstens zwei durch getrennte Steuermittel ansteuerbare Flächenbereiche aufweist.

Unter Flächenbereichen sind vorliegend Bereiche der Tastfläche zu verstehen, in denen jeweils unterschiedliche Informationen über ein taktil erfassbar dargestelltes Anzeigeelement angezeigt werden können.

Beispielsweise wird die Form eines auf einem Monitor eines Computers dargestellten Kreises in einem ersten Flächenbereich der Tastfläche in einem an die Dimension des ersten Flächenbereiches angepassten Maßstab dargestellt. In dem zweiten Flächenbereich wird dagegen z.B. in einer von Anwender erlernbaren Symbolik angezeigt, daß es sich bei dem Kreis im ersten Flächenbereich um eine Grafik handelt.

Somit kann der Anwender beim Ertasten des Kreises im ersten Flächenbereich anhand der ertastbaren Anzeige im zweiten Flächenbereich auf Anhieb erfassen, daß es sich bei dem Kreis um eine Grafik handelt, und nicht etwa um ein Bedienungsicon des Computerprogramms oder ein Schriftzeichen oder einen Teil davon.

In anderen Worten ist bei obigen Beispiel die der Anzeige im ersten Flächenbereich entnehmbare Information über das dort dargestellte Anzeigeelement die Form des Anzeigeelements an sich. Dagegen ist aus der Anzeige im zweiten Flächenbereich die Information über das Anzeigeelement herauszulesen, daß es sich dabei um eine Grafik handelt.

Vorteilhafte Ausgestaltungen der Anzeigevorrichtung sind in Unteransprüchen 2 bis 12 angegeben.

Es ist günstig, wenn es sich bei dem ersten Flächenbereich um einen Darstellungsbereich handelt, in welchem wenigstens 180 Tastelemente vorgesehen sind, so daß in ihm die taktil erfassbare Form wenigstens eines Anzeigeelements anzeigbar ist.

Ferner ist es vorteilhaft, wenn es sich bei dem zweiten Flächenbereich um einen Kontrollbereich handelt, in welchem wenigstens 100 Tastelemente vorgesehen sind, so daß in ihm wenigstens eine Eigenschaft der im Darstellungsbereich angezeigten Form des Anzeigeelements anzeigbar ist.

Bei dieser Ausgestaltung hat die Anzeigevorrichtung eine ausreichende Größe, um sowohl das Anzeigeelement an sich als auch dessen Eigenschaft (Grafik, Schriftzeichen, Bedienungsicon oder dergleichen sowie die Position des Anzeigeelementes auf der Tastfläche) anzuzeigen.

Es ist günstiger, wenn insgesamt, d. h. für den ersten und den zweiten Flächenbereich zusammengenommen, wenigstens 5 000 Tastelemente vorgesehen sind, wobei insgesamt 5 000 Tastelemente in einer Matrix von 50 Zeilen und 100 Spalten angeordnet sein können.

Eine vorteilhaft dimensionsierte Tastfläche steht zur Verfügung, wenn insgesamt wenigstens 9 000 Tastelemente vorgesehen sind, wobei insgesamt 9 000 Tastelemente in einer Matrix von 75 Zeilen und 120 Spalten angeordnet sein können.

Auf diese weise kann der Darstellungsbereich solche Abmessungen aufweisen, daß Anzeigeelemente dort in einem Maßstab dargestellt werden können, welcher die taktile Wahrnehmung des Anwenders erleichtert.

Vorteilhaft sind Sensormittel vorgesehen, welche mit Fingern eines Benutzers zusammenarbeiten. Dies ermöglicht eine Interaktion des Anwenders mit der Anzeigevorrichtung bzw. dem der Anzeige auf der Anzeigevorrichtung zu Grunde liegenden Datenfluß, beispielsweise demjenigen eines ausgeführten Computerprogramms.

Vorteilhaft weisen die Sensormittel wenigstens eine Elektrode auf, welche einen Teil eines Kondensators bildet, der mit einer Kapazitätsmeßeinrichtung verbunden ist. Ein solcher Sensor ist relativ günstig zu realisieren und weist eine ausreichende Empfindlichkeit auf.

Für eine bequeme Bedienung der Anzeigevorrichtung ist es günstig, wenn bei gleichzeitigem Ansprechen einer vorgegebenen Anzahl von Sensormitteln abhängig von der Position der ansprechenden Sensormittel auf der Anzeigevorrichtung die Position der jeweiligen Flächenbereiche auf der Tastfläche vorgebbar ist.

Auf diese Weise ist es möglich, daß der Anwender die verschiedenen Flächenbereiche nach seinen persönlichen Vorlieben auf der Anzeigevorrichtung ausrichtet. Beispielsweise kann die Zahl der Sensormittel, die dazu ansprechen muß, davon abhängig sein, welche Fläche sie gemeinsam einnehmen. Diese Fläche kann wiederum in etwa der Fläche des Handballens eines Anwenders entsprechen.

Ruht also der Handballen eines Anwenders auf oder über mehreren Sensormitteln gleichzeitig, so sprechen diese gleichzeitig an und ihre Position kann daraus bestimmt werden. Ein Flächenbereich der Anzeigevorrichtung kann dann entsprechend zu den ansprechenden Sensormittel benachbart angeordnet werden.

In einer Weiterentwicklung ist vorgesehen, daß bei gleichzeitigem Ansprechen einer vorgegebenen Anzahl von Sensormitteln über eine vorgegebene Zeitspanne abhängig von der Position der ansprechenden Sensormittel auf der Anzeigevorrichtung die Position der jeweiligen Flächenbereiche auf der Tastfläche vorgebbar ist.

Durch das zusätzliche Kriterium, wonach die vorgegebene Anzahl von Sensormitteln über eine vorgegebene Zeitspanne ansprechen muß, wird sichergestellt, daß ein Flächenbereich nicht aufgrund eines unbeabsichtigten kurzzeitigen Ruhens beispielsweise eines Handballens auf der Tastfläche bzw. mehreren Sensormitteln zu einer Positionsveränderung eines Flächenbereiches führt.

Zum Verfahren der Tastelemente ist es vorteilhaft, wenn die Tastelemente mittels jeweils eines Stellmotors zwischen ihrer über die Tastfläche des Gehäuses überstehende Taststellung und ihrer in die lichte Kontur der Tastfläche eingefahrene Ruhestellung verfahrbar sind.

Bei einem Anzeigesystem der eingangs genannten Art wird die oben genannte Aufgabe dadurch gelöst, daß eine mit der Anzeigevorrichtung kommunizierende Prozessoreinheit vorgesehen ist.

Auf diese weise können zum Beispiel von einem Computer-Anwendungsprogramm erzeugte und auf der Anzeigevorrichtung darzustellende Anzeigeelemente mittels einer geeigneten Programmierung der Prozessoreinheit schnell so aufbereitet werden, daß die gewünschten Informationen auf der Anzeigevorrichtung dargestellt werden.

Vorteilhafte Weiterentwicklungen des Anzeigesystems sind in Unteransprüchen 13 bis 20 angegeben.

Es ist günstig, wenn die Prozessoreinheit derart programmiert ist, daß sie einen Datenfluß auswertet und daraus Steuersignale für das Steuermittel für den Kontrollbereich der Anzeigevorrichtung einerseits und für das Steuermittel für den Darstellungsbereich der Anzeigevorrichtung andererseits berechnet.

In anderen Worten wird ein Datenfluß dahingehend ausgewertet, daß die Prozessoreinheit berechnet, was im ersten Flächenbereich und was im zweiten Flächenbereich angezeigt werden soll.

Bei einem reinen Bildelement, d.h. einer Grafik, erfolgt z. B. die Anzeige der Form einer Grafikelementes im ersten Flächenbereich und die Anzeige eines Symbols im zweiten Flächenbereich, welches die Eigenschaft des Grafikelementes wiedergibt, daß es sich dabei um eine Grafik handelt.

Für die Interaktion des Anwenders mit der Anzeigevorrichtung bzw. dem der Anzeige zu Grunde liegenden Datenfluß ist es günstig, wenn die Prozessoreinheit derart programmiert ist, daß sie von der Anzeigevorrichtung empfangener Ausgangssignale in Steuerdaten für den Datenfluß umwandelt.

Dies bedeutet, daß die Prozessoreinheit auf Grund von der Anzeigevorrichtung empfangener Ausgangssignale in einen Datenfluß eingreifen kann. Dies kann beispielsweise derart erfolgen, daß auf der Anzeigevorrichtung angezeigte Bedienungsicons über die Anzeigevorrichtung, nämlich durch Auslösen der Sensormittel der Anzeigevorrichtung, betätigt werden.

Für eine sinnvolle Auswertung des der Anzeige auf der Anzeigevorrichtung zu Grunde liegenden Datenflusses ist es vorteilhaft, wenn die Auswertung des Datenflusses die Erfassung wenigstens einer Eigenschaft eines Anzeigeelementes umfaßt. Bei dieser Eigenschaft kann es sich um die Form des Anzeigeelementes, um die Art des Anzeigeelementes und/oder die Position des Anzeigeelementes auf der Tastfläche handeln.

Unter der Form des Anzeigeelementes ist hier nicht nur die äußere Kontur zu verstehen, sondern vielmehr die flächige Form, in welcher das Anzeigeelement auf der Anzeigevorrichtung angezeigt wird.

Die Art des Anzeigeelementes betrifft die zu ermittelnde Eigenschaft, ob es sich bei dem Anzeigeelement um ein Bildelement (Grafik) oder ein Zeichenelement (Schriftzeichen, Bedienungsicon oder dergleichen) handelt.

Bedienungsfreundlich ist es insbesondere, wenn die Prozessoreinheit die Steuerung der Anzeigevorrichtung derart ansteuert, daß die Form eines Anzeigeelementes im ersten Flächenbereich der Anzeigevorrichtung und die Art des Anzeigeelementes und/oder dessen Position auf der Tastfläche im zweiten Flächenbereich der Anzeigevorrichtung angezeigt wird.

Nachstehend werden Ausführungsbeispiele der Erfindung anhand der beigefügten Zeichnung näher erläutert. In dieser zeigen:
- Figur 1: eine Aufsicht auf einen Ausschnitt einer taktilen Anzeigevorrichtung;
- Figur 2: eine perspektivische Ansicht einer oberen Abdeckung einer Anzeigeeinheit, wie sie bei der Anzeigevorrichtung von Figur 1 verwendet wird, wobei diese Abdeckung einen Teil einer kapazitiven Eingabeeinheit bildet;
- Figur 3: einen Teilschnitt durch die Anzeigevorrichtung von Figur 1;
- Figur 4: ein schematisches Blockschaltbild eines Detektionskanales, der mit der Abdeckung von Figur 2 zusammenarbeitet;
- Figur 5: schematisch die Anordnung zweier Flächenbereiche der Tastfläche der Anzeigevorrichtung von Figur 1;
- Figur 6: eine der Figur 5 entsprechende Darstellung mit vertauschter Anordnung der zwei Flächenbereiche;
- Figur 7: eine der Figur 5 entsprechende Darstellung mit einem in seiner Position veränderten Flächenbereich; und
- Figur 8: eine schematische Darstellung eines Anzeigsystems, bei dem die Anzeigevorrichtung von Figur 1 mit einem Computer zusammenarbeitet.

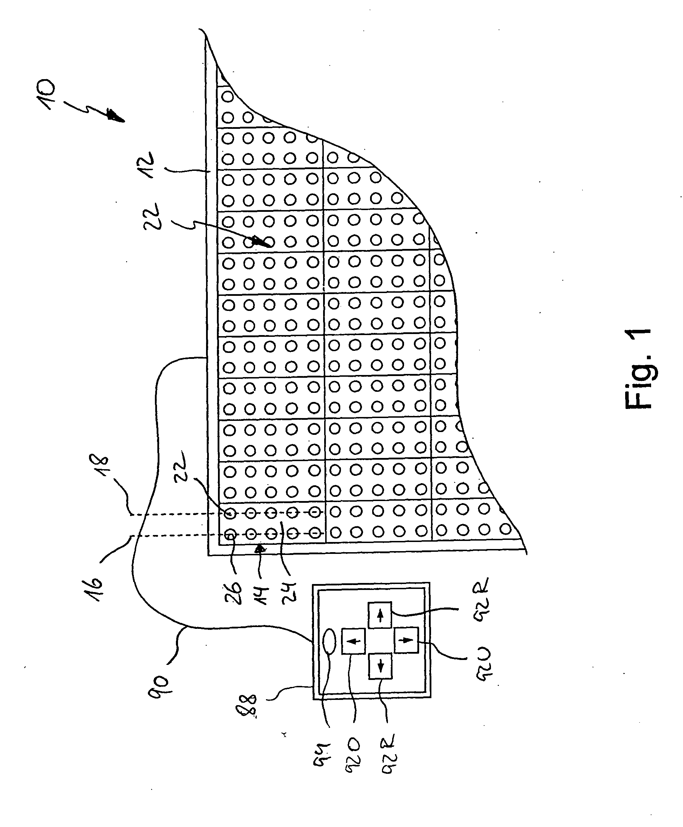

In Figur 1 ist ein Ausschnitt einer taktilen Anzeigetafel 10 mit einem Rahmen 12 in einer Draufsicht gezeigt.

Der Rahmen 12 umgibt Anzeigeeinheiten 14, welche in einer Matrix angeordnet sind. Jede der Anzeigeeinheiten 14 umfaßt zwei Spalten 16, 18 zu je fünf Anzeigestiften 20.

Die Anzeigestifte 20 sind in zur Oberfläche einer Tastfläche 22 senkrechter Richtung verlagerbar, um so ein taktiles Bild einer Computerausgabe darzustellen, beispielsweise von grafischen Anzeigeelementen, von Braille-Schriftzeichen oder dergleichen.

Es ist ein Tastenfeld 88 vorgesehen, welches weiter unten näher erläutert wird.

Jede der Anzeigeeinheiten 14 hat eine Deckplatte 24, welche zwei Reihen von je fünf Führungsbohrungen 26 für jeweils das Ende eines Anzeigestiftes 20 aufweist.

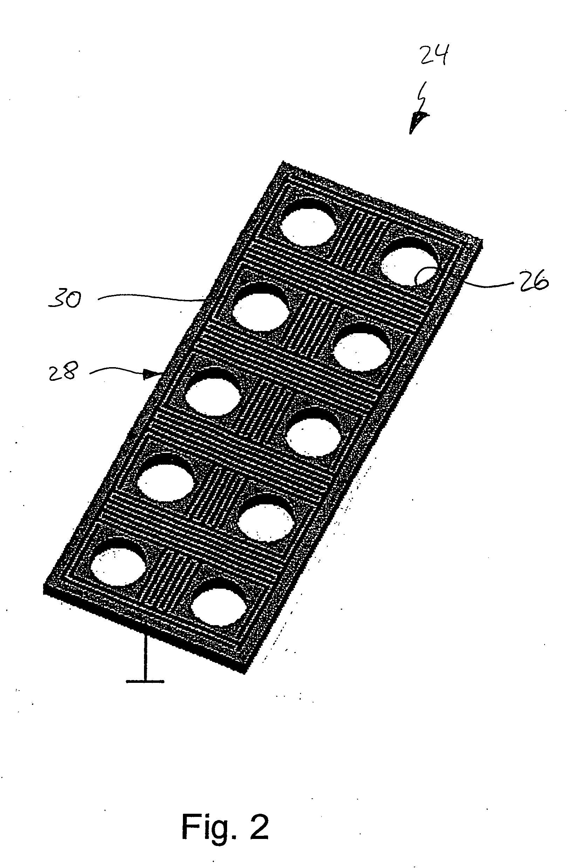

Wie in Figur 2 zu erkennen ist, ist die Deckplatte 24 mit einer insgesamt mit 28 bezeichneten Elektrode versehen, die als Kondensatorelektrode dient und zusammen mit einem Finger eines Benutzers und Masse einen Kondensator bildet.

Die Elektrode 28 umfaßt die Führungsbohrungen 26 umgebende mäanderförmig verlaufende Leiterbahnen 30. Die Funktionsweise der Deckplatte 24 mit der Elektrode 28 wird weiter unten näher erläutert.

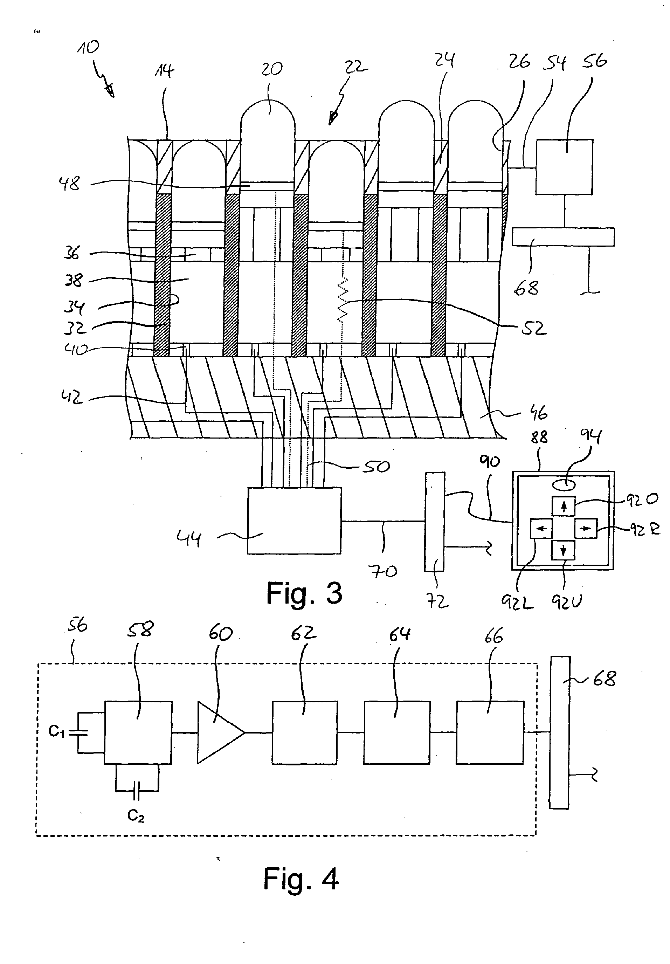

Wie in Figur 3 zu erkennen ist, befindet sich hinter der Deckplatte 24 eine mittlere Gehäuseplatte 32, welche Führungsbohrungen 34 aufweist, die eine fluchtende Fortsetzung der Führungsbohrungen 26 der Deckplatte 24 darstellen.

Die Anzeigestifte 20 sind über stabförmige Antriebsteile 36 mit in Figur 3 schematisch angedeuteten Stellmotoren 38 verbunden, welche fest in den Führungsbohrungen 34 der mittleren Gehäuseplatte 32 sitzen und ein zu den Abmessungen der Führungsbohrungen 34 komplementäres Gehäuse haben.

Bei den Stellmotoren 38 kann es sich um elektromagnetische Stellmotoren, nach dem Tauchspulenprinzip arbeitende Stellmotoren, lineare Synchronmotoren, Kombinationen aus einem kleinen Elektromotor und einem Zahnstangentrieb oder dergleichen oder auch um fluidische Stellmotoren handeln.

Die Stellmotoren 38 weisen jeweils einen Anschluß 40 auf, der über eine Leitung 42 mit einer Steuerung 44 verbunden ist. Die Energieversorgung der Stellmotoren 38 erfolgt auf herkömmliche Weise und ist der Übersichtlichkeit halber nicht dargestellt.

Auf der der Deckplatte 24 entgegengesetzten Seite der mittleren Gehäuseplatte 32 ist eine Bodenplatte 46 angebracht, durch welche die Stellmotoren 38 abgestützt sind.

In die Anzeigestifte 20 ist jeweils ein Schwingquarz 48 eingelassen, welcher über eine Leitung 50 mit der Steuerung 44 verbunden ist, wodurch der Schwingquarz 48 mit Wechselspannung beaufschlagbar ist. Dieses Schwingquarz-System ist derart abgestimmt, daß der Schwingquarz 48 dann mit einer Frequenz von etwa 1 Hz vibriert.

Von den Leitungen 50 sind in Figur 3 lediglich zwei gepunktet dargestellt. Die Leitungen 50 verlaufen durch die Stellmotoren 38 hindurch oder an diesen vorbei und sind in ihrer Länge veränderbar, was in Figur 3 durch einen "gefalteten" Abschnitt 52 angedeutet ist. So kann die Leitung 50 mit einem jeweiligen Anzeigestift 20 mitgeführt werden, wenn dieser über die Tastfläche 22 hinaus ausgefahren wird.

Die Elektrode 28 jeder Deckplatte 24 steht über eine Leitung 54 mit jeweils einem Schaltkreis 56 in Verbindung, welcher in Figur 4 im Detail zu erkennen ist; die Elektrode 28 und der Schaltkreis 56 bilden zusammen einen Sensor 28, 56.

Legt ein Anwender seinen Finger auf die Elektrode 28, so wird durch die Elektrode 28, den Finger der Person, deren Körper und die Masse ein Kondensator gebildet, welcher in Figur 4 mit C₁ bezeichnet ist. Vergleicht man die Kapazität dieses Sensor-Kompensators C₁ mit der Kapazität eines Referenzkondensators C₂, so kann erfaßt werden, ob sich auf der Deckplatte 24 einer Anzeigeeinheit 14 ein Finger des Anwenders befindet oder nicht.

Um diesen Vergleich durchzuführen, ist gemäß Figur 4 ein Komparator 58 vorgesehen. Dieser kann die Kapazitäten der mit seinen beiden Eingängen verbundenen Kondensatoren auf eine beliebige bekannte Weise vergleichen oder messen, z. B. durch Vergleich der Schwingfrequenzen von Schwingkreisen, welche den Kondensator C₁ bzw. den Kondensator C₂ als frequenzbestimmendes Element enthalten.

Das Ausgangssignal des Komparators 58 läßt somit erkennen, ob sich ein Finger des Anwenders auf der Deckplatte 24 befindet oder nicht.

Wenn die Deckplatte 24 weniger als die hier gezeigten 2x5 Führungsbohrungen 26 umfaßt, wird die auf eine Berührung ansprechende Fläche entsprechend kleiner. Prinzipiell ist es möglich, daß jede Anzeigeeinheit 14 eine Deckplatte 24 mit lediglich einer einzigen Führungsbohrung 26 aufweist, so daß exakt bestimmt werden kann, über welchem Anzeigestift 20 sich der Finger des Benutzers befindet.

Zur weiteren Verarbeitung wird das Ausgangssignal des Komparators 58 über einen Verstärker 60, einen Sample/Hold-Kreis 62, einen Analog/Digital-Wandler 64 und ein Logik-Interface 66 auf einen Datenbus 68 gegeben.

Ein weiterer Datenbus 72 kommuniziert über eine Leitung 70 mit der Steuerung 44.

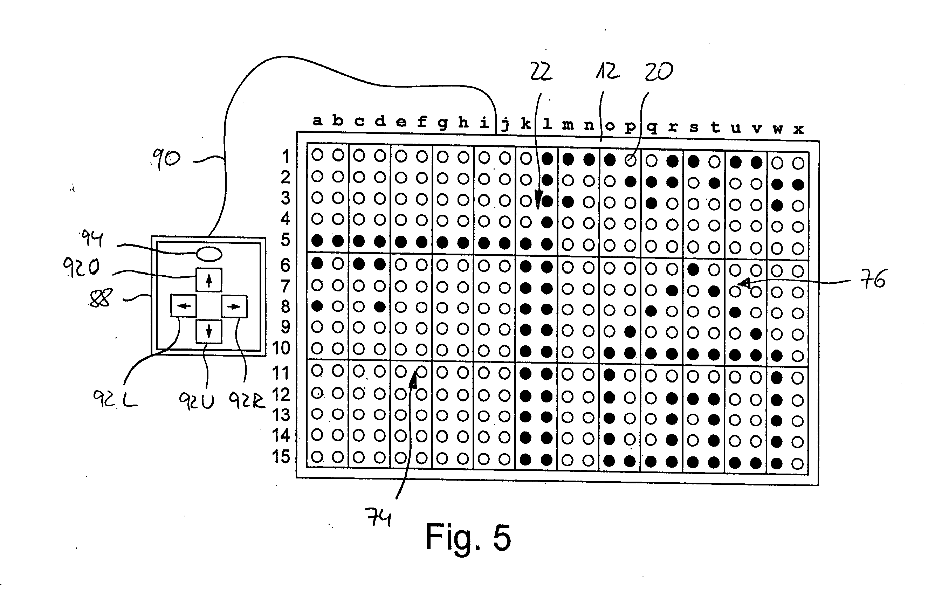

In den Figuren 5 bis 7 ist jeweils eine taktile Anzeigevorrichtung 10 gezeigt, bei der 36 Anzeigeeinheiten 14 in einer 3x12-Matrix angeordnet sind. Dies bedeutet, daß 360 Anzeigestifte 20 in einer 15x24-Matrix vorliegen.

Es können auch mehr als 360 Anzeigestifte 20 für die Flächenbereiche 74, 76 der Anzeigetafel 10 zusammengenommen vorgesehen sein, beispielsweise insgesamt wenigstens 5000, wobei 5000 Anzeigestifte 20 in einer Matrix von 40x50 Anzeigestiften 20 angeordnet sein können.

In der Praxis sind insgesamt 9000 Anzeigestifte 20 in einer Matrix von 120 Spalten und 75 Zeilen in einem Abstand von etwa 2,5 mm angeordnet. Dies ergibt in etwa die Fläche eines DIN A4-Blattes.

Zur besseren Orientierung sind in den Figuren 5 bis 7 die jeweiligen Spalten mit den Kleinbuchstaben a bis x und die jeweiligen Zeilen mit den Ziffern 1 bis 15 bezeichnet. Nachstehend wird bei der Benennung eines bestimmten Anzeigestiftes 20 immer zuerst die Spalte und dann die Zeile genannt, also beispielsweise Anzeigestift g5.

Schwarz ausgefüllte Anzeigestifte 20 bedeuten, daß diese mittels der Stellmotoren 28 in eine über die Tastfläche 22 überstehende Taststellung gebracht sind. Die als weiße Kreise dargestellten Anzeigestifte 20 befinden sich dagegen in ihrer in die lichte Kontur der Tastfläche 22 eingefahrenen Ruhestellung.

Wie in Figur 5 zu erkennen ist, ist die Tastfläche 22 der taktilen Anzeigetafel 10 in zwei Flächenbereiche unterteilt. Dabei handelt es sich einerseits um einen Kontrollbereich 74, welcher durch die Anzeigestifte a5 bis j5 in Zeile 5 und die Anzeigestifte k5 bis k15 in Spalte k und einen Teil des Rahmens 12 abgegrenzt ist. Der Kontrollbereich 74 umfaßt somit 100 Anzeigestifte 20 in einer 10x10-Matrix.

Zum anderen liegt ein Darstellungsbereich 76 vor, welcher gegenüber dem Kontrollbereich 74 durch die Anzeigestifte 11 bis 115 in Spalte 1 und ansonsten durch einen Teil des Rahmens 12 begrenzt ist. Der Darstellungsbereich 76 umfaßt also 180 Anzeigestifte 20 in einer 12x15-Matrix.

Der Darstellungsbereich 76 dient dazu, daß dort üblicherweise auf einem Anzeigemonitor eines Computers dargestellte Anzeigeelemente, wie Grafiken und/oder Schriftzeichen o.ä., in Form von für den Anwender taktil erfassbarer Information dargestellt wird, indem entsprechende Anzeigestifte 20 mittels der Steuerung 44 und der Stellmotoren 38 angesteuert werden, so daß diese Anzeigestifte 20 linienhafte oder flächige Anzeigeelemente wiedergeben.

Vorliegend ist beispielhaft im in Figur 5 unteren Bereich des Darstellungsbereichs 76 schematisch ein Haus dargestellt, wogegen im oberen Bereich des Darstellungsbereichs 76 Braille-Schriftzeichen gezeigt sind.

Wie bereits eingangs erwähnt, kann der blinde bzw. sehbehinderte Anwender zwar die einzelnen über die Tastfläche 22 überstehenden Anzeigestifte 20 im Darstellungsbereich 76 erfühlen. Eine Zuordnung, ob es sich bei einem jeweiligen Anzeigestift 20 um den Teil eines Schriftzeichens oder aber einer Grafik handelt, ist für ihn jedoch nicht sofort ersichtlich.

Zur Übermittlung dieser weiteren Information über ein im Darstellungsbereich 76 angezeigtes Anzeigeelement ist der Kontrollbereich 74 vorgesehen. In Figur 5 sind im oberen Bereich des Kontrollbereiches 74 beispielhaft mit den Anzeigenstiften a6 und a8 bzw. c6, d6 und d8 zwei Symbole dargestellt, welche die benötigte Information enthalten sollen.

Dabei bedeutet das aus den Stiften a6 und a8 zusammengesetzte Symbol beispielsweise, daß im oberen Bereich des Darstellungsbereiches 76 Schriftzeichen vorzufinden sind, wogegen das aus den Anzeigestiften c6, d6 und d8 zusammengesetzte Symbol beinhaltet, daß im unteren Bereich des Darstellungsbereiches 76 eine einzige zusammengehörende Grafik angezeigt ist.

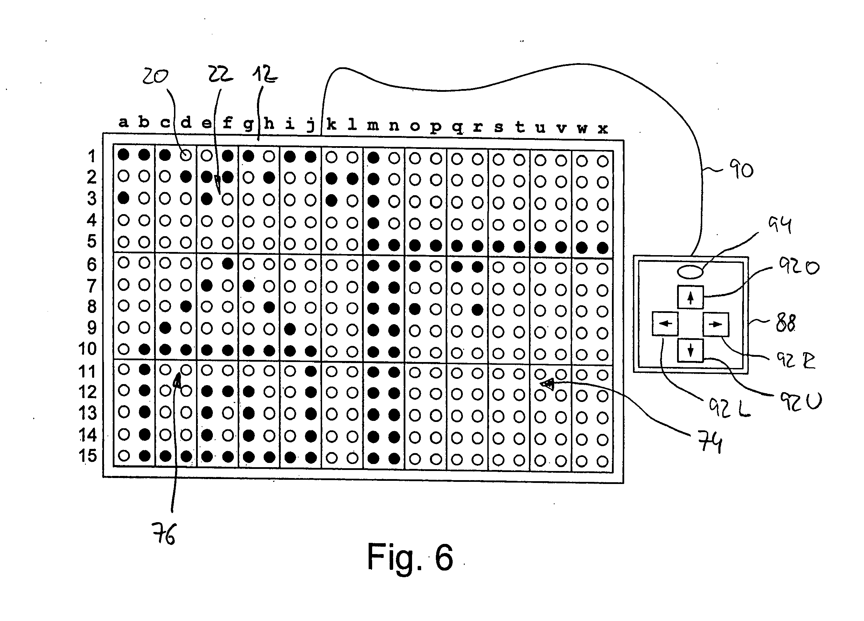

Der Kontrollbereich 74 und der Darstellungsbereich 76 sind in verschiedenen Positionen auf der Tastfläche 22 der taktilen Anzeigetafel 10 anordenbar. Dies ist am Beispiel in Figur 6 gezeigt, bei welcher der Kontrollbereich 74 und der Darstellungsbereich 76 gegenüber Figur 5 vertauscht sind.

Bei der Anordnung des Kontrollbereichs 74 und des Darstellungsbereiches 76 gemäß Figur 5 soll der Anwender zweckmäßig mit der rechten Hand den Darstellungsbereich 76 und mit der linken Hand den Kontrollbereich 74 ertasten.
In Figur 6 wäre dies umgekehrt. Die taktile Anzeigevorrichtung 10 kann also an die persönlichen Vorlieben des Anwenders angepaßt werden, abhängig beispielsweise davon, ob es sich bei dem Anwender um einen Rechts- oder um einen Linkshänder handelt.

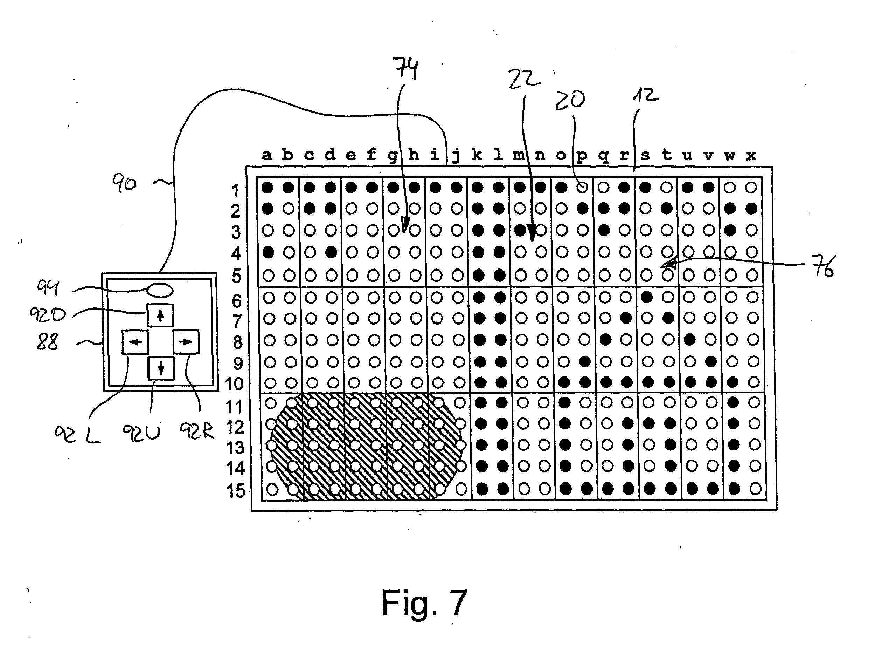

Darüber hinaus ist die taktile Anzeigetafel 10 in der Lage, zu erfassen, wo sich die Hand des Anwenders, welche den Kontrollbereich 74 ertasten soll, nachstehend Kontrollhand genannt, befindet. Dazu wird ermittelt, ob mehrere eine zusammenhängende Fläche bildende Elektroden 28 bei der jeweiligen Komparatorschaltung 56 gleichzeitig ein Ausgangssignal erzeugen. Dies kann z.B. dadurch erfolgen, daß der Anwender mit dem Handballen seiner Kontrollhand auf einem größeren Bereich der Tastfläche 22 ruht, beispielsweise auf der in Figur 7 angedeuteten Fläche 78.

Zusätzlich kann vorgesehen sein, daß die von mehreren Sensoren 28, 56 erzeugten Ausgangssignale über einen vorgegebenen Zeitraum aufrechterhalten werden müssen, damit eine Positions-Änderung entsprechend der Position der ansprechenden Sensoren 28, 56 erfolgt.

In diesem Fall kann die Steuerung den Kontrollbereich 74 gegenüber demjenigen in Figur 5 in Richtung auf die Zeile 1 verschieben, so daß sich der Kontrollbereich 74 oberhalb der Fläche 78 bzw. des Handballens der Kontrollhand des Anwenders befindet.

Auch die Abmessungen des Kontrollbereiches 74 und des Darstellungsbereiches 76 können von dem Anwender entsprechend seinen persönlichen Bedürfnissen oder Vorlieben vorgegeben werden. Dazu kann die Steuerung eine entsprechende Einstellmöglichkeit umfassen. Andererseits kann dies auch über eine entsprechende Software erfolgen, welche weiter unten noch näher erläutert wird.

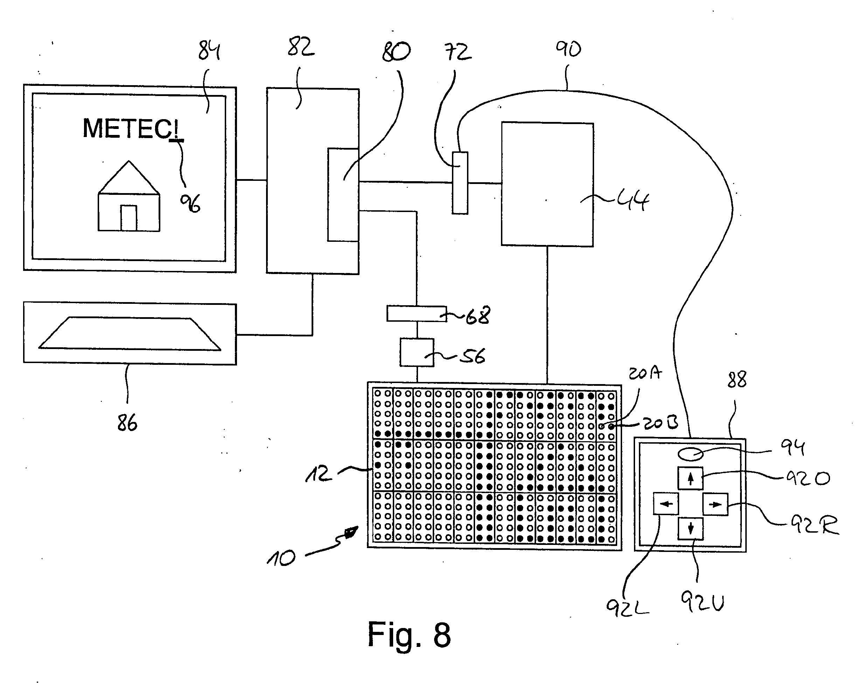

In einem in Figur 8 gezeigten Anzeigesystem steht die taktile Anzeigetafel 10 über die Schnittstellen 68 und 72 mit dem Prozessor 80 eines Rechners 82 in Verbindung. 72 mit einem Prozessor 80 eines Rechners 82 in Verbindung.

Dabei kann es sich um einen herkömmlichen Computer 82 handeln, welcher wiederum mit einem visuellen Monitor 84 und einem Eingabefeld 86 in Verbindung steht.

Der Prozessor 80 kann über eine geeignete Software eine maßstabsgerechte, an die Abmessung der Tastfläche 22 angepasste Umsetzung des auf dem Monitor 84 gezeigten Bildes im Darstellungsbereich 76 der taktilen Anzeigetafel 10 erzeugen.

Der Prozessor 80 berechnet anhand der Daten, die ihm zur Erzeugung des auf dem Monitor 84 dargestellten Bildes vorliegen, Steuersignale für die Steuerung 44 und übermittelt diese über den Datenbus 72 an die Steuerung 44.

Dazu werden die auf dem Monitor 84 gezeigten einzelnen Anzeigeelemente zunächst intern in Schwarzweiß-Strich- bzw. Punktzeichnungen umgewandelt, deren Kontur bzw. Form eine sinnvolle Wiedergabe der auf dem Monitor 84 zu erkennenden Anzeigeelemente ist und die mittels der taktilen Anzeigetafel 10 dargestellt werden können.

Gleichzeitig ermittelt der Prozessor 80, welcher Art das analysierte Anzeigeelement ist, ob es sich also um ein Bildelement (Grafik), ein Zeichenelement (Schriftzeichen, Symbole oder dergleichen) oder um ein Steuerelement (Icon) handelt.

Die Daten des Computerprogramms, auf Grund derer das Anzeigeelement "Haus" auf dem Monitor 84 in Figur 8 erzeugt wird, werden also von dem Prozessor 80 verarbeitet und einer Grafik zugeordnet.

Diejenigen Daten des Computerprogramms, auf denen die Darstellung der alpha-numerischen Schriftzeichen auf dem Anzeigemonitor 84 beruht, werden ebenfalls von dem Prozessor 80 analysiert und ausgewertet, Schriftzeichen zugeordnet und intern in entsprechende Braille-Schriftzeichen umgewandelt.

Dann werden anhand dieser Strich- bzw. Punktzeichnungen und der Braille-Schriftzeichen diejenigen Anzeigestifte 20 ermittelt, die zur Darstellung des Monitorbildes auf der Anzeigetafel 10 angesteuert werden müssen. Der Prozessor 82 erzeugt entsprechende Steuersignale und überträgt diese an die Steuerung 44, wobei vorgesehen ist, daß Bedienungsicons des ausgeführten Computerprogramms im Kontrollbereich 74, sonstige Anzeigeelemente jedoch im Darstellungsbereich 76 dargestellt werden.

Die Steuerung 44 steuert auf Grund der vom Prozessor 80 erzeugten Steuersignale die entsprechenden Stellmotoren 38 an, wodurch die jeweiligen Anzeigestifte 20 im Darstellungsbereich 76 der Tastfläche 22 zusammen das auf dem Anzeigemonitor 84 zu sehende Bild auf der Tastfläche 22 als taktil erfassbare Darstellung bilden.

Ferner berechnet der Prozessor 80 des Rechners 82 bezüglich der Anzeigeelemente, die kein Bedienungs-Icon bedeuten, Steuersignale für den Kontrollbereich 74. Dazu hat der Prozessor 80 bereits ermittelt, welcher Art ein bestimmtes Anzeigeelement auf dem Anzeigemonitor 84 ist, ob es sich also um ein Schriftzeichen, eine Grafik, ein Steuerelement oder dergleichen handelt. Zudem ist bekannt, wo das zugehörige Anzeigeelement jeweils auf der Tastfläche 22 positioniert ist.

Der Prozessor 80 übermittelt entsprechende Steuersignale über den Datenbus 72 an die Steuerung 44, wodurch vorgegebene Symbole im Kontrollbereich 74 erzeugt werden.

Die zu verwendende Symbolik für den Kontrollbereich 74 ist frei wählbar, so daß der Anwender entweder vorgegebene Symbole erlernen kann, oder selber Symbole, die bestimmte Informationen repräsentieren, definieren kann, indem der Prozessor 80 entsprechend programmiert wird.

Der Kontrollbereich 74 und der Darstellungsbereich 76 werden durch getrennte Steuermittel, die die Steuerung 44 bilden angesteuert. Dazu wertet der Prozessor 80 den Datenfluß des ausgeführten Computerprogramms aus und berechnet daraus Steuersignale sowohl für das Steuermittel für den Kontrollbereich 74 als auch für das Steuermittel für den Darstellungsbereich 76.

Unter Datenfluß sind hier alle von dem Prozessor 80 auswertbaren Daten oder Signale zu verstehen, nicht nur Daten eines Computerprogramms. Es kann sich beispielsweise auch um Daten oder Signale handeln, welche zur Erzeugung eines Fernsehbildes dienen.

Wie in Figur 8 zu erkennen ist, kommuniziert der Prozessor 80 des Rechners 82 über das Interface 68 mit jedem der Komparatorschaltungen 56. Das von einer Komparatorschaltung 56 erzeugte Ausgangssignal wird von dem Prozessor 80 empfangen und verarbeitet.

So kann der Prozessor 80 beispielsweise anhand der Ausgangssignale der Komparatorschaltungen 56 erfassen, daß der Kontrollbereich 74 innerhalb der Tastfläche 22 verschoben werden soll, wenn mehrere, eine zusammengehörende Fläche bildende Elektroden 28 gleichzeitig ein Signal erzeugen oder ein Sensorausgangssignal über ein Zeitspanne bereitsteht, die länger ist als eine vorgegebene Eingabezeit (Klick-Zeit) .

Ferner ist auf Grund der Berechnungen des Prozessors 80 bekannt, wo und welche Bedienungs-Icons des ausgeführten Computerprogramms im Kontrollbereich 74 vorhanden sind. Bei einem ausgeführten Textverarbeitungsprogramm könnte beispielsweise eine Symbol für "Fettdruck" im Kontrollbereich 74 erscheinen.

Drückt der Anwender auf dieses Bedienungs-Icon, so wird durch das Ansprechen der entsprechenden Elektrode(n) 28 ein Ausgangssignal erzeugt, aus dem der Prozessor 80 erfassen kann, daß der Anwender nun in-den Fettdruck-Modus wechseln möchte. Diese Information wandelt der Prozessor 80 dann in entsprechende Steuerdaten für das Textverarbeitungsprogramm um, so daß dieses in den Fettdruck-Modus wechselt.

Auch hier kann vorgesehen sein, daß die Ausgangssignale der jeweiligen Komparatorschaltungen 56 über eine bestimmte Zeitspanne vorliegen müssen, um als Befehlssignal erkannt zu werden.

So wird vermieden, daß ein zufälliges Verweilen des Fingers des Anwenders auf oder über einer Deckplatte 24 zu einem unbeabsichtigten Eingabebefehl führt.

Dieses Prinzip ist bei einer geeigneten Software zur Kommunikation des Prozessors 80 mit der Anzeigetafel 10 bei einer Vielzahl von verschiedenen Bedienungs-Icons anwendbar, seien sie Bestandteil des ausgeführten Computerprogramms oder speziell für die Bedienung der Anzeigetafel 10 angelegte Bedienungsicons.

Die Art des ausgeführten Computerprogramms, mit welchem der Anwender arbeiten möchte, beispielsweise ein Textverarbeitungsprogramm oder ein Zeichenprogramm, ist nicht beschränkt.

Das eingangs erwähnte Tastenfeld 88 ist über ein Kabel 90 mit dem Datenbus 72 der Steuerung 44 verbunden. Es weist vier Tasten 920, 92U, 92R und 92L auf, die den auf einer Standard-Computertastatur vorgesehenen Cursortasten "Cursor nach oben", "Cursor nach unten", Cursor nach rechts" und "Cursor nach links" entsprechen.

Zwischen der äußeren Begrenzung des Tastenfeldes 88 und der Taste 920 ist eine Erhebung 94 vorgesehen, wodurch ein blinder bzw. sehbehinderter Anwender ertasten kann, bei welcher der Tasten 92 es sich um die Taste 920, also "Cursor nach oben", handelt, um so auch die übrigen Tasten 92 zuordnen zu können.

Die Position des auf dem Monitor 84 erscheinenden Cursors 96 wird auf dem Tastenfeld 22 mittels zweier vibrierender Anzeigestifte 20 angezeigt, die in Figur 8 mit den Bezugszeichen 20A und 20B bezeichnet sind.

Die Anzeigestifte 20A und 20B werden mittels des Schwingquarzes 48 zur Vibration gebracht, indem auf diese über die Steuerung 44 Wechselspannung gegeben wird.

Der Prozessor 80 ermittelt dazu die Position des Cursors 96 auf dem Monitor 84 und erzeugt ein entsprechendes Steuersignal, welches über den Datenbus 72 an die Steuerung 44 übertragen wird.

Will der Anwender nun die Position des Cursors 96 verändern, so drückt er die Taste 920, 92U, 92R oder 92L. Dies wird über den Datenbus 72 zum Prozessor 80 übertragen, der den Cursor 48 entsprechend der gedrückten Taste 92 bewegt, gleichzeitig ein neues Steuersignal berechnet und an die Steuerung 44 sendet, so daß die vibrierenden Anzeigestifte 20A und 20B ihre Position auf der Tastfläche 22 verändern, die dann der Position des Cursors 96 auf dem Monitor 84 entspricht.

Die Verwendung eines externen Cursor-Tastenfeldes 88 hat den Vorteil, daß die häufig benötigten Funktionen immer gleich liegen und nicht durch teure Anzeigeeinheiten, die auch mehr Platz einnehmen, realisiert werden müssen. Im Prinzip kann man die Cursor-Steuerung aber auch in den Kontrollbereich 74 legen.

Der Kontrollbereich 74 und der Darstellungsbereich 76 ermöglichen so eine Interaktion des Anwenders mit dem ausgeführten Computerprogramm.

Als weiteres Beispiel dafür kann der Anwender über das Betätigen eines entsprechenden Symbols innerhalb des Kontrollbereichs 74 den Befehl an den Computer 82 bzw. den Prozessor 80 übermitteln, daß nunmehr eine Eingabe erfolgen soll.

Dann wird im Darstellungsbereich 76 z.B. das Alphabet in Braille-Schriftzeichen angezeigt, welche der Anwender gezielt erfassen und betätigen kann. Der Prozessor 80 wertet das von der jeweiligen Komparatorschaltung 56 empfangene Ausgangssignal aus und setzt dieses in entsprechende Eingabedaten um.

Durch das Drücken eines weiteren entsprechenden Symbols im Kontrollbereich 74 zeigt der Anwender nach seiner Eingabe an, daß diese beendet ist. Die Anzeige im Darstellungsbereich 76 wechselt dann wieder von der Darstellung des Alphabets zur Wiedergabe des Bildes auf dem Monitor 84, welches nun zusätzlich die Eingabe des Anwenders umfaßt.

Beim Drücken eines Symbols im Kontrollbereich 74 erzeugt der entsprechende Sensor 28, 56, wie erwähnt, ein Ausgangssignal, welches von dem Prozessor 80 empfangen wird.

Zur Interaktion des Anwenders mit dem ausgeführten Computerprogramm wandelt der Prozessor 80 dieses Ausgangssignal in entsprechende Steuerdaten für den Datenfluß des Computerprogramms um.

Sowohl der Kontrollbereich 74 als auch der Darstellungsbereich 76 dienen der Erfassung von Information und der Interaktion. Die hier gewählten Begriffe "Kontrolle" und "Darstellung" zur Kennzeichnung der Flächenbereiche 74 und 76 sollen lediglich den Funktionsschwerpunkt des jeweiligen Flächenbereichs 74 bzw. 76 andeuten.

Feststehende Bedienungstasten wie "Eingabe starten" und "Eingabe beenden" oder dergleichen können in Abwandlung auch bereits auf dem Tastenfeld 88 vorgesehen sein.

Das über das Kabel 90 beweglich mit der Anzeigevorrichtung 10 verbundene Tastenfeld 88 ermöglicht es dem Anwender, das Tastenfeld 88 frei zu positionieren.

Das Tastenfeld 88 kann jedoch auch mit dem Rahmen 12 der Anzeigevorrichtung 10 verbunden vorgesehen sein oder seine Funktion kann durch die auf einer Standard-Computertastatur vorhandenen Cursortasten erfüllt werden.

Die Tasten 92 des Tastenfeldes 88 können auch andere Funktionen erfüllen als die hier erläuterte Cursorfunktion. Prinzipiell sind alle Arten von Funktionstasten vorstellbar.

Grundsätzlich kann jedoch auch auf das Tastenfeld 88 verzichtet werden und die Steuerung beispielsweise des Cursors einzig über entsprechende Symbole innerhalb des Kontrollfeldes erfolgen.

## Patentansprüche

1. Anzeigevorrichtung zur taktil erfassbaren Darstellung von Anzeigeelementen mit
a) einem Gehäuse (12, 24, 46) mit einer Tastfläche (22) ;
b) einer Vielzahl von Tastelementen (20), welche zwischen einer über die Tastfläche (22) des Gehäuses (12, 24, 46) überstehende Taststellung und einer in die lichte Kontur der Tastfläche (22) eingefahrenen Ruhestellung verfahrbar sind; und
c) einer Steuerung (44) mit welcher ausgewählt einzelne Tastelemente (20) ansteuerbar sind,
**dadurch gekennzeichnet, daß**
d) die Tastfläche (22) wenigstens zwei durch getrennte Steuermittel (44) ansteuerbare Flächenbereiche (74, 76) aufweist.

2. Anzeigevorrichtung nach Anspruch 1, **dadurch gekennzeichnet, daß** es sich bei einem ersten Flächenbereich (76) um einen Darstellungsbereich (76) handelt, in welchem wenigstens 128 Tastelemente (20) vorgesehen sind, so daß in ihm die taktil erfassbare Form wenigstens eines Anzeigeelements anzeigbar ist.

3. Anzeigevorrichtung nach Anspruch 2, **dadurch gekennzeichnet, daß** es sich bei einem zweiten Flächenbereicht (74) um einen Kontrollbereich (74) handelt, in welchem wenigstens 100 Tastelemente (20) vorgesehen sind, so daß in ihm wenigstens zumindest eine Eigenschaft des im Darstellungsbereich (76) angezeigten Anzeigeelements anzeigbar ist.

4. Anzeigevorrichtung nach einem der Ansprüche 1 bis 3, **dadurch gekennzeichnet, daß** insgesamt wenigstens 5 000 Tastelemente (20) vorgesehen sind.

5. Anzeigevorrichtung nach Anspruch 4, **dadurch gekennzeichnet, daß** insgesamt 5 000 Tastelemente (20) in einer Matrix von 50 Zeilen und 100 Spalten angeordnet sind.

6. Anzeigevorrichtung nach Anspruch 4, **dadurch gekennzeichnet, daß** insgesamt 7 200 Tastelemente (20) in einer Matrix von 60 Zeilen und 120 Spalten angeordnet sind.

7. Anzeigevorrichtung nach einem der Ansprüche 1 bis 3, **dadurch gekennzeichnet, daß** insgesamt wenigstens 9 000 Tastelemente (20) vorgesehen sind.

8. Anzeigevorrichtung nach einem der Ansprüche 1 bis 7, **dadurch gekennzeichnet, daß** Sensormittel (28, 56) vorgesehen sind, welche mit Fingern eines Benutzers zusammenarbeiten.

9. Anzeigevorrichtung nach Anspruch 8, **dadurch gekennzeichnet, daß** die Sensormittel (28, 56) wenigstens eine Elektrode (28) aufweisen, welche einen Teil eines Kondensators bilden, der mit einer Kapazitätsmeßeinrichtung (56) verbunden ist.

10. Anzeigevorrichtung nach Anspruch 8 oder 9, **dadurch gekennzeichnet, daß** bei gleichzeitigem Ansprechen einer vorgegebenen Anzahl von Sensormitteln (28, 56) abhängig von der Position der ansprechenden Senormittel (28, 56) auf der Anzeigevorrichtung (10) die Position der jeweiligen Flächenbereiche (74, 76) auf der Tastfläche (22) vorgebbar ist.

11. Anzeigevorrichtung nach Anspruch 8 bis 10, **dadurch gekennzeichnet, daß** bei gleichzeitigem Ansprechen einer vorgegebenen Anzahl von Sensormitteln (28, 56) über eine vorgegebene Zeitspanne abhängig von der Position der ansprechenden Senormittel (28, 56) auf der Anzeigevorrichtung (10) die Position der jeweiligen Flächenbereiche (74, 76) auf der Tastfläche (22) vorgebbar ist.

12. Anzeigevorrichtung nach einem der Ansprüche 1 bis 11, **dadurch gekennzeichnet, daß** die Tastelemente (20) mittels jeweils eines Stellmotors (38) zwischen ihrer über die Tastfläche (22) des Gehäuses (12, 24, 46) überstehende Taststellung und ihrer in die lichte Kontur der Tastfläche (22) eingefahrenen Ruhestellung verfahrbar sind.

13. Anzeigesystem zur Anzeige einer taktil erfassbaren Darstellung von Anzeigeelementen mit einer Anzeigevorrichtung (10) nach einem der Ansprüche 1 bis 12, **dadurch gekennzeichnet, daß** eine mit der Anzeigevorrichtung (10) kommunizierende Prozessoreinheit (80) vorgesehen ist.

14. Anzeigesystem nach Anspruch 13, **dadurch gekennzeichnet, daß** die Prozessoreinheit (80) derart programmiert ist, daß sie einen Datenfluß auswertet und daraus Steuersignale für das Steuermittel (44) für den ersten Flächenbereich (76) der Anzeigevorrichtung (10) einerseits und für das Steuermittel (44) für den zweiten Flächenbereich (74) der Anzeigevorrichtung (10) andererseits berechnet.

15. Anzeigesystem nach Anspruch 13 oder 14, **dadurch gekennzeichnet, daß** die Prozessoreinheit (80) derart programmiert ist, daß sie von der Anzeigevorrichtung (10) empfangene Ausgangssignale in Steuerdaten für den Datenfluß umwandelt.

16. Anzeigesystem nach Anspruch 14 oder 15, **dadurch gekennzeichnet, daß** die Auswertung des Datenflusses die Erfassung wenigstens einer Eigenschaft eines Anzeigeelementes umfaßt.

17. Anzeigesystem nach Anspruch 16, **dadurch gekennzeichnet, daß** es sich bei einer Eigenschaft um die mittels der Anzeigevorrichtung (10) taktil erfassbar darstellbare Form des Anzeigeelementes handelt.

18. Anzeigesystem nach Anspruch 16 oder 17, **dadurch gekennzeichnet, daß** es sich bei einer Eigenschaft um die Art des Anzeigeelementes handelt.

19. Anzeigesystem nach einem der Ansprüche 16 bis 18,
**dadurch gekennzeichnet, daß** es sich bei einer Eigenschaft um die Position des Anzeigeelementes auf der Tastfläche (22) handelt.

20. Anzeigesystem nach einem der Ansprüche 16 bis 19,
**dadurch gekennzeichnet, daß** die Prozessoreinheit (80) die Steuerung (44) der Anzeigevorrichtung (10) derart ansteuert, daß die Form eines Anzeigeelementes im ersten Flächenbereich (76) der Anzeigevorrichtung (10) und die Art des Anzeigeelementes und/oder die Position des Anzeigeelementes auf der Tastfläche (22) im zweiten Flächenbereich (74) der Anzeigevorrichtung (10) angezeigt
